**Europäisches Patentamt**

**European Patent Office**

**Office européen des brevets**

(19)

(11) Publication number: **0 183 888**

**A1**

(12) # EUROPEAN PATENT APPLICATION

(21) Application number: **84850334.8**

(22) Date of filing: **30.10.84**

(51) Int. Cl.⁴: **F 16 B 12/14**
**F 16 B 39/36, F 16 B 37/10**

(43) Date of publication of application:
**11.06.86 Bulletin 86/24**

(84) Designated Contracting States:
**AT BE CH DE FR GB IT LI LU NL SE**

(71) Applicant: **AKTIEBOLAGET IVAR ERICSON**
**Box 7008**
**S-550 07 Jönköping(SE)**

(72) Inventor: **Sterte, Ragnar**
**Box 7008**
**S-55007 Jönköping(SE)**

(74) Representative: **Adéll, Bengt-Ingvar**
**Bellevuegatan 5 B**
**S-552 62 Jönköping(SE)**

(54) **Attachment device.**

(57) This invention relates to such attachment devices between two work pieces, for instance a furniture leg (1) and a frame (2) of a furniture, which consist of a screw (9), which is inserted into a hole in said first work piece and further into a lock washer (5) of a somewhat sagging material, which washer by a slot (4) is divided up into two lock washer (5) portions, which are revolving towards each other around a hinge (6), said hinge has a hole for the end portion of the screw, whereby the shape of the lock washer is such that before the tightening of the screw the lock washer will rest against a wall of the second work piece (2) with two edges (12), which are situated at a distance from the slot (4) and with the hinge situated at a distance from said wall, so that, when tightening the screw, the washer portions (5) will revolve against each other and lockingly press against the screw.

The locking effect will be strengthened by the attachment device according to the invention in that way that the end portion of the screw (9) and the lock washer (5) are placed in a recess (3) in the second work piece (2), so that said edges (12) of the lock washer (5) will rest against surfaces of the wall of the recess, which oppose each other, so that after the tightening of the screw the pressure from said surfaces against these points will cooperate to press the washer portions against the screw.

FIG.1.

0183888

ATTACHMENT DEVICE

The present invention relates to an attachment device between two work pieces, for instance a furniture leg and a frame of a chair, bedstead or table, said attachment device is consisting of a screw, which is inserted in a hole through a first work piece and further in a corresponding hole through the second work piece to a recess in said second work piece, which is perpendicular to said hole.

At a known performance of this kind a cylindrical nut is inserted in the recess after which one has to screw the threaded end portion of the screw into a threaded hole in the nut, which is perpendicular to the nut. The risk involved hereby is that the nut gradually will get loose.

At another performance, for instance known from the US patent No. 2 430 831, the end portion of the screw is driven into a threaded hole in a lock washer, which by a slot is divided up into two washer portions, which are revolvable towards each other by means of a hinge provided with said hole, whereby the edges of the slot have threaded portions corresponding to the threads of the screw. The lock washer contacts a plain surface of the second work piece and is shaped to rest against the plain surface on two places situated at a distance from the slot and with said hinge at some distance from said surface, so that, when tightening the screw, the washer portions will revolve towards each other and lockendly press against the screw from each others direction.

The characteristics of the invention will be evident from the following patent claims and an object of the invention is to obtain an attachment device, which has a better locking effect than the locking effect of the attachment device according to the US patent.

The invention will be described more in detail with reference to the accopanying drawings, wherein

Figure 1 is a side view of portions of a frame and a furniture leg which are connected by an attachment device according to the invention and before the tightening of a screw belonging to the attachment device;

Figure 2 is a sectional view along the line A-A in Figure 1;

Figure 3 is a view corresponding to Figure 1 and after the tightening of the screw;

Figure 4 is a view corresponding to Figure 1 and showing a modified performance of the attachment eevice;

Figure 6 corresponds to Figure 3 and shows the attachment device according to Figure 4 after the tightening of the screw; and

Figure 7 is a sectional view along the line C-C in Figure 6.

In the drawings 1 and 2 are portions of a furniture leg respective a frame of a furniture which is supported by the leg. A lock washer of a somewhat sagging plastic material is inserted in a recess 3, which is open from the side, said washer is by a slot 4 divided up into two washer portions 5, which are connected by the remaining part of the lock washer, said part functioning as a joint or hinge 6 between the washer portions.

The lock washer is shaped as a portion of a cylinder with a towards the leg turned cylindric surface 7 having a somewaht greater radius of curvature than that of the cylindrical wall 14 of the recess 3. A screw 9 having a head 8 resting against the exterior surface of the leg is inserted in a hole through the leg 1, which hole continues through the frame 2 into the recess 3 and through a corresponding hole through the hinge 6 of the lock washer and further as grooves in the portions of the washer portions 5, which surround the slot 4.

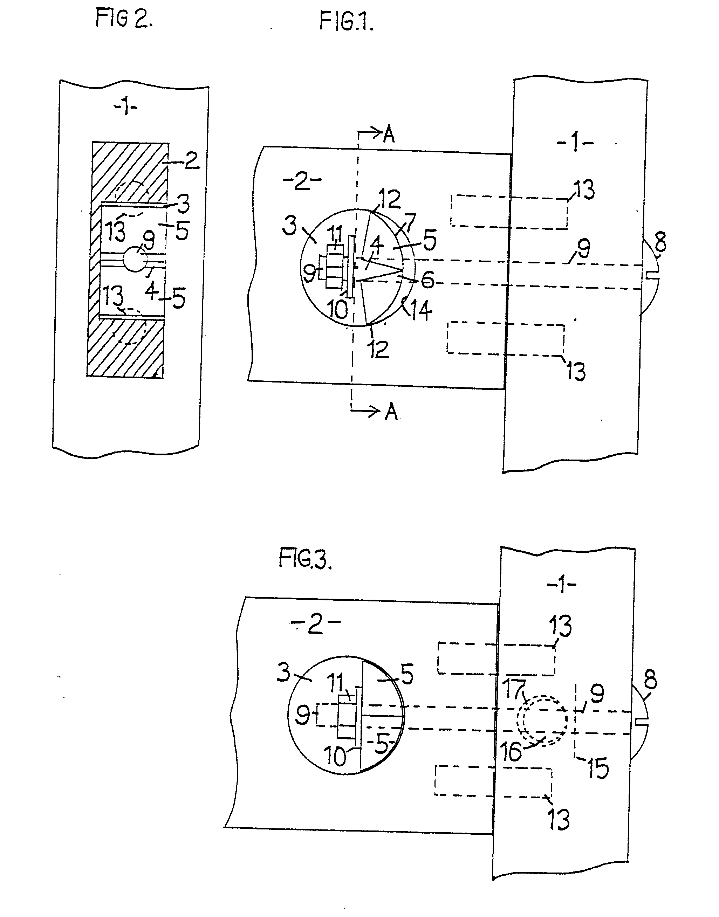

A washer 10 is threaded on to the end portion of the screw and is protruding outside the lock washer, and further outside the washer a nut 11 is screwed on the screw. Before the tightening of the screw and the nut the cylindrical sur-
face 7 of the lock washer is resting against the wall 14 of
the recess merely with edges 12, situated far from the screw,
as will be evident from Figure 1.

At the tightening of the screw and the nut the portions of
the lock washer as situated around the slot 4 will be forced
to the right on the drawing, whereby the slot closes around
the screw thereby locking the screw from an unintenional tur-
ning. Due to the sagging pressure from the lock washer the
nut will also be locked from turning. The locking effect will
be strengthened by the pressure of the edges 12 against the
screw.

In this case the hole through the hinge 6 of the lock washer as well as the grooves can have smooth surfaces in the
portions of the washer portions 5, which surround the slot.

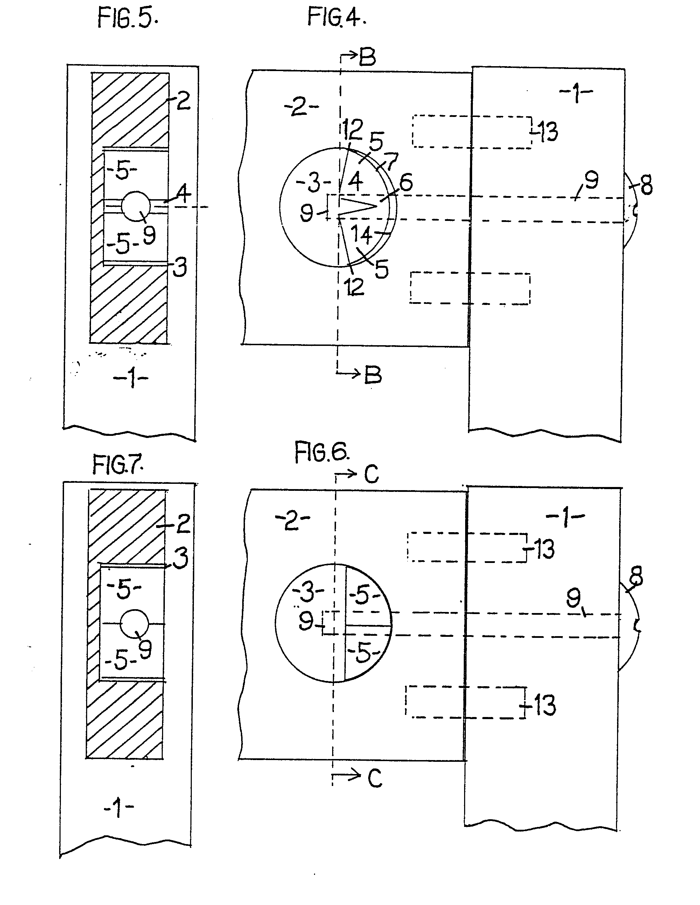

On the other hand said surfaces of the embodiment as shown
in Figures 4 to 7 have threads corresponding to the threads
of the screw 9, in which case one will obtain the same effect
without use of a nut and a washer.

The invention can be modified within the scope of the below
patent claims. Thus the two washer portions 5 of the lock washer can show plain surface portions turned against the surface
of the recess instead of the shown cylindrical surface. It is
possible to use another material than plastics for the lock
washer. The attachment device can be used to connect other
work pieces than furniture parts.

Patent claims.

1. An attachment device between two work pices, for instance a furniture leg (1) and a frame (2) of a chair, and consisting of a screw (9), which is inserted in a hole through a first work piece (1) and in a corresponding hole through the second work piece (2) and further through a lock washer (5) of a somewhat sagging material, said lock washeris by a slot (4) divided up into two towards each other around a hinge (6) revolvable washer portions (5), said hinge has a hole for the end portion of the screw, whereby the lock washer is shaped to rest before the tightening of the screw against a surface of the second work piece by means of two edges (12) situated in a distance from the slot and with the hinge situated far from said surface, so that when tightening the screw the washer portions will swing towards each other and from each its direction lockingly press against the screw, c h a r a c t e r i z e d in that the endportion of the screw (9) and the lock washer (5) are situated in a recess (3) in the second work piece (2), whereby before the tightening of the screw the pressure from said surfaces will cooperate to the pressure of the washer portions (5) against the screw.

2. Attachment device as in claim 1, c h a r a c t e r i- z e d in that the recess (3) has a cylindrical inner wall.

3. Attachment device as in claim 2, c h a r a c t e- rized in that before the tightening of the screw (9) the lock washer (5) has an external cylindrical surface (7) turned towards the cylindrical inner wall of the recess (3) and having a somewhat greater radius of curvature than the radius of curvature of said cylindrical inner wall of the recess.

4. Attachment device as in any of the claims 1 to 3, c h a r a c t e r i z e d of a nut (11) screwed onto the end portions of the screw (9).

5. Attachment device as in claim 4, c h a r a c t e r i-
z e d  in that the hole through the hinge (6) of the lock
washer (5) as well as its extension as grooves in the portions of the washer portions as turned against each other
are smoth.

FIG 2.    FIG.1.

FIG.3.

0183888

FIG.5.

FIG.4.

FIG.7.

FIG.6.

# EUROPEAN SEARCH REPORT

0183888

Application number

EP 84 85 0334

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| D,A | US-A-2 430 831 (SIMMONOS)<br>* Column 2, line 35 - column 3, line 55; figures 1-3 * | 1 | F 16 B 12/14<br>F 16 B 39/36<br>F 16 B 37/10 |
| A | US-A-2 654 923 (JOHNSON)<br>--- | | |
| A | BE-A- 556 862 (NAIMER)<br>* Page 6, line 31 - page 8, line 13; figure 7 * | | |
| A | GB-A- 255 380 (CARR FASTENER)<br>--- | | |
| A | CH-A- 468 564 (ALFRED FÄSSLER-NÄPFLIN)<br>----- | | TECHNICAL FIELDS SEARCHED (Int. Cl.4)<br><br>F 16 B |

The present search report has been drawn up for all claims

| Place of search | Date of completion of the search | Examiner |
|---|---|---|
| THE HAGUE | 24-02-1986 | VAN DER WAL W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82